# EUROPÄISCHE PATENTSCHRIFT

(11) **EP 2 675 847 B1**
(45) Veröffentlichungstag und Bekanntmachung des Hinweises auf die Patenterteilung: **08.08.2018**
(21) Anmeldenummer: 12707228.8
(22) Anmeldetag: 16.02.2012
(51) Int. Cl.: C08L 67/04, C08L 97/00, C08L 77/08, C08L 7/00, C08K 3/34, C08K 5/103

(54) **PLASTIFIZIERBARER KUNSTSTOFF-WERKSTOFF AUF DER BASIS DER NATURPOLYMERE POLYLACTID UND/ODER LIGNIN**
PLASTICIZABLE POLYMER MATERIAL BASED ON THE NATURAL POLYMERS POLYLACTIDE AND/OR LIGNIN
MATÉRIAU SYNTHÉTIQUE PLASTIFIABLE À BASE DES POLYMÈRES NATURELS POLYLACTIDE ET/OU LIGNINE

(30) Priorität: 16.02.2011 DE 102011011427; 02.03.2011 DE 102011012869
(43) Veröffentlichungstag der Anmeldung: 25.12.2013
(73) Patentinhaber: Tecnaro Gesellschaft zur industriellen Anwendung nachwachsender Rohstoffe mbH, 74360 Ilsfeld (DE)
(72) Erfinder: NÄGELE, Helmut, 74336 Brackenheim (DE); PFITZER, Jürgen, 71717 Beilstein (DE); ZIEGLER, Lars, 74074 Heilbronn (DE); PORTER, Benjamin, 2000 Antwerpen (BE); ULMER, Bernhard, 97215 Uffenheim (DE)
(74) Vertreter: Lichti - Patentanwälte Partnerschaft mbB
(86) Internationale Anmeldenummer: PCT/EP2012/000675
(87) Internationale Veröffentlichungsnummer: WO 2012/110237

(56) Entgegenhaltungen:
- EP-A1- 2 415 838
- WO-A1-2009/153204
- DE-A1- 4 121 111
- JP-A- 2009 209 234
- JP-A- 2010 163 481
- US-A1- 2010 256 262
- HABLOT E ET AL: "Renewable biocomposites of dimer fatty acid-based polyamides with cellulose fibres: Thermal, physical and mechanical properties", COMPOSITES SCIENCE AND TECHNOLOGY, ELSEVIER, UK, Bd. 70, Nr. 3, 1. März 2010 (2010-03-01), Seiten 504-509, XP026882879, ISSN: 0266-3538, DOI: 10.1016/J.COMPSCITECH.2009.12.001 [gefunden am 2009-12-11]

## Beschreibung

Die Erfindung betrifft einen plastifizierbaren Kunststoff-Werkstoff, welcher einen Anteil an wenigstens einem natürlichen Polymer aus der Gruppe Polylactid und Lignin einschließlich deren Mischungen und/oder Derivaten enthält, ein Polymer-Formteil aus einem solchen Kunststoff-Werkstoff sowie ein Verfahren zu seiner Herstellung.

Im Zuge der Verknappung von fossilen Rohstoffen, wie sie zur Herstellung von synthetischen Polymeren vornehmlich eingesetzt werden, besteht ein zunehmender Bedarf an einer Substitution von synthetischen Polymeren durch natürliche Polymere auf der Basis nachwachsender Rohstoffe. Letztere weisen zudem eine neutrale oder zumindest deutlich günstigere Kohlendioxidbilanz auf und sind in der Regel in erheblich kürzeren Zeiten biologisch abbaubar bzw. kompostierbar.

Den größten Anteil innerhalb der synthetischen Kunststoffe haben die Thermoplaste. Diese werden auf thermoplastischen Verarbeitungsmaschinen, wie insbesondere Extrudern, Spritzgießmaschinen oder Warmformpressen, unter Energieeinwirkung in Form von Wärme und/oder Friktion in einen plastischen Zustand überführt und in Matrizen oder Werkzeugen zum gewünschten Formteil geformt. Gelänge es nun, einen Werkstoff zu generieren, der ausschließlich aus schnell nachwachsenden Rohstoffen gewonnen und außerdem auf herkömmlichen thermoplastischen Verarbeitungsmaschinen zu verarbeiten ist, ergäbe sich eine in ökologischer und ökonomischer Hinsicht wesentlich günstigere Bilanz.

Aus der Natur sind eine Reihe von Werkstoffen bekannt, die für solche Anwendungen geeignet wären. Hierzu gehören einerseits Lignine bzw. deren Derivate, welche sich jedoch in reiner Form nur verhältnismäßig schlecht durch Extrudieren und praktisch gar nicht durch Spritzgießen verarbeiten lassen und zu diesem Zweck den Zusatz von Verarbeitungshilfsmitteln erfordern. Andererseits zeichnen sich die genannten Lignine durch im Vergleich mit anderen Naturpolymeren merklich bessere Werkstoffeigenschaften aus, wie eine vergleichsweise hohe Festigkeit, Steifigkeit, Schlagzähigkeit sowie eine hohe Beständigkeit gegenüber UV-Strahlung. Weiterhin sind Ligninwerkstoffe geeignete Dämmmittel zur Wärme- und Schallisolierung. Lignin ist ein hochmolekulares polyphenolisches Makromolekül, das in verholzenden Pflanzen die Räume zwischen den Zellmembranen ausfüllt und zu Holz werden lässt, wobei ein Mischkörper aus druckfestem Lignin und zugfester Cellulose entsteht. Lignin fällt in großen Mengen als Nebenprodukt bei der Zellstoffgewinnung an und ist somit in großen Mengen verfügbar. Hierbei entstehen beim Aufschluss von Holz Ligninsulfonsäuren als Bestandteil der Sulfitablaugen, in denen die Ligninsulfonsäuren als Phenolate ("Alkalilignin") gelöst sind. Durch Behandlung mit Schwefelsäure und Kohlendioxid kann die Ligninsäure ausgefällt werden. Beispiele von thermoplastisch verarbeitbaren Ligninderivaten sind beispielsweise der WO 2010/ 081775 A1 zu entnehmen.

Ähnliches gilt für ein weiteres natürliches Polymer, nämlich für Polylactid (Polymilchsäure, PLA) und dessen Derivate, welches zur Substitution von synthetischen Polymeren bereits verbreiteten Einsatz findet. Polylactid wird gegenwärtig vornehmlich zur Herstellung von Folien, z.B. für die Landwirtschaft oder zur Verpackung von Lebensmitteln und Hygieneartikeln, von Textilfasern sowie von mehr oder minder formstabilen Formteilen, z.B. in Form von Schalen oder Bechern zu Verpackungszwecken eingesetzt. Polylactid weist thermoplastische Eigenschaften auf und besitzt eine Glasübergangstemperatur von etwa 50°C bis 55°C sowie einen Schmelzpunkt im Bereich von etwa 150°C. Polylactide sind insbesondere durch ionische Polymerisation von Lactid, einem ringförmigen Zusammenschluss von zwei Milchsäuremolekülen, erhältlich, wobei bei Temperaturen zwischen etwa 140°C und etwa 180°C in Gegenwart eines Katalysators, beispielsweise Zinnoxid, eine Ringöffnungspolymerisation gemäß der nachfolgenden Reaktionsgleichung stattfindet: 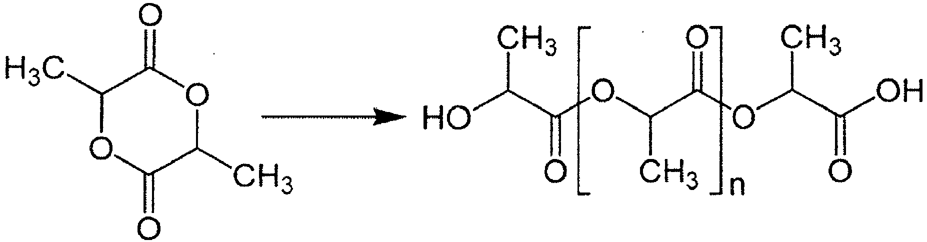 Indes besteht auch ein Nachteil von Polylactiden darin, dass sie zwar eine vergleichsweise hohe Steifigkeit mit einem Elastizitätsmodul von größer 3000 N/mm² aufweisen, jedoch ebenso wie Lignin eine nur geringe Schlagzähigkeit besitzen, so dass Polylactide aufgrund ihrer hiermit verbundenen Sprödigkeit nur beschränkt einsetzbar sind. Um dem zu begegnen, werden gegenwärtig einerseits Polyesterwerkstoffe eingesetzt, welche jedoch relativ teuer und insbesondere nicht biologischen Ursprungs sind, so dass der Anteil an synthetischen Bestandteilen mit zunehmendem Zusatz ansteigt. Andererseits finden herkömmlich Weichmacher Verwendung, wie beispielsweise Alkylphthalate, Bisphenol-A, Alkylphosphate oder Triphenylphosphinoxid, welche jedoch ebenfalls synthetischen Ursprungs sind und insbesondere aus dem Polylactid heraus diffundieren können, was ein gesundheitliches Gefährdungspotenzial darstellt. Darüber hinaus weist Polylactid eine nur relativ geringe Wärmeformbeständigkeit (ermittelt nach HDT/B gemäß der Norm DIN EN ISO 75-1,-2) von etwa 50°C auf.

Die nachveröffentlichte EP 2 415 838 A1 beschreibt ein Kompositmaterial aus 15 Mass.-% bis 60 Mass.-% Naturfasern, 35 Mass.-% bis 80 Mass.-% Polyamiden und 0,1 Mass.-% bis 30 Mass.-% weiteren Additiven, wobei die Polyamide eine Erweichungstemperatur kleiner 220°C besitzen und einen Anteil von 30 Mol-% bis 50 Mol-% Dimerfettsäuren enthalten. Das Kompositmaterial kann darüber hinaus andere, mit den Polyamiden misch- und extrudierbare Polymere enthalten, wie beispielsweise Naturpolymere auf der Basis von Polylactiden.

Der Erfindung liegt die Aufgabe zugrunde, einen plastifizierbaren Kunststoff-Werkstoff sowie ein hieraus erzeugtes Polymer-Formteil der eingangs genannten Art auf einfache und kostengünstige Weise dahingehend weiterzubilden, dass ihm unter zumindest weitestgehender Vermeidung der vorgenannten Nachteile verbesserte Werkstoffeigenschaften, wie insbesondere eine erhöhte Schlagzähigkeit, verliehen werden können. Sie ist ferner auf ein Verfahren zur Herstellung eines solchen Kunststoff-Werkstoffes gerichtet.
Diese Aufgabe wird erfindungsgemäß bei einem plastifizierbaren Kunststoff-Werkstoff sowie bei einem hieraus gefertigten Polymer-Formteil der eingangs genannten Art dadurch gelöst, dass der Kunststoff-Werkstoff in Form eines thermoplastischen Elastomer-Werkstoffes vorliegt und einen Anteil an wenigstens einem natürlichen Polymer aus der Gruppe Polylactid und Lignin einschließlich deren Mischungen und/oder Derivaten und einen Anteil an wenigstens einem Polyamid auf der Basis von Dimerfettsäure enthält, wobei der thermoplastische Elastomer-Werkstoff ferner einen Anteil an hierin eindispergiertem Kautschuk enthält.
In verfahrenstechnischer Hinsicht wird diese Aufgabe bei einem Verfahren zu Herstellung eines solchen Kunststoff-Werkstoffes in Form eines thermoplastischen Elastomer-Werkstoffes dadurch gelöst, dass wenigstens ein natürliches Polymer aus der Gruppe Polylactid und Lignin einschließlich deren Mischungen und/oder Derivaten und wenigstens ein Polyamid auf der Basis von Dimerfettsäure, gegebenenfalls unter Zusetzen wenigstens einer weiteren Komponente aus der Gruppe der
- feinpartikulären Feststoffe;
- insbesondere natürlichen Verstärkungsfasern;
- Weichmacher; und
- weiteren Additive
plastifiziert und homogenisiert wird, wobei ein Anteil an Kautschuk zugesetzt wird, wonach das Plastifikat abgekühlt wird. Sodann kann es insbesondere granuliert werden.

Überraschenderweise wurde gefunden, dass der dem/den natürlichen Polymer(en) auf der Basis von Polylactid und/oder Lignin erfindungsgemäß zugesetzte Anteil an wenigstens einem Polyamid auf der Basis von Dimerfettsäure die Schlagzähigkeit des natürlichen Polymers in erheblichem Maße zu erhöhen vermag, wobei sich die Schlagzähigkeit sowie auch die Steifigkeit bzw. der Elastizitätsmodul des Kunststoff-Werkstoffes durch entsprechende Mischungsverhältnisse des natürlichen Polymers auf der Basis von Polylactid und/oder Lignin mit dem Polyamid auf der Basis von Dimerfettsäure in weiten Bereichen einstellen lässt. Dabei wird die hohe Festigkeit von Polylactid, Lignin bzw. deren Mischungen und Derivaten in allenfalls vernachlässigbarer Weise beeinträchtigt, so dass es gelingt, die insoweit günstigen Werkstoffeigenschaften der genannten natürlichen Polymere zu nutzen, aber insbesondere ihre sowohl für die Verarbeitung als auch für hieraus hergestellte Formteile oft nachteilige Sprödigkeit erheblich zu vermindern, wofür bereits relativ geringe Mengen an dem erfindungsgemäß zugesetzten Polyamid auf der Basis von Dimerfettsäure wirksam sind. In der nachfolgenden Tabelle sind in diesem Zusammenhang exemplarisch die Werkstoffeigenschaften einerseits von zwei Polylactiden (Handelsname "INGEO™ PLA 4032" bzw. "INGEO™ PLA 3251" des Herstellers NatureWorks LLC), andererseits von Polymer-Blends der identischen Polylactide mit jeweils 10 Mass.-% (bezogen auf den gesamten Polymer-Blend) an Polyamiden auf der Basis von Dimerfettsäure (Handelsname "Macromelt 2344" bzw. "Macromelt 6769" des Herstellers Henkel KGaA) zusammengefasst:

| **WERKSTOFF** | **Charpy, 23°C X [kJ/m²]** | **Zug E-Modul [MPa]** | **Streck-spannung [MPa]** | **Streck-dehnung [%]** | **Bruch-dehnung [%]** |
|---|---|---|---|---|---|
| "PLA 4032" + 10% "Macromelt 2344" | 51,92 | 1951 | 64,35 | 3,88 | 13,94 |
| reines "PLA 4032" (Referenz) | 18,41 | 2724 | 72,92 | 2,96 | 3,69 |
| | | | | | |
| "PLA 3251" + 10% "Macromelt 6769" | 28,07 | 2027 | 61,64 | 3,51 | 5,6 |
| reines "PLA 3251" (Referenz) | 14,06 | 2939 | 68,91 | 2,59 | 2,7 |

Aus vorstehender Tabelle wird deutlich, dass bereits ein 10%-iger Anteil an dem Polyamid auf Basis von Dimerfettsäure zu einer Erhöhung der Schlagzähigkeit des spröden Polylactides auf mehr als das Doppelte führt (einerseits von 18,41 kJ/m² auf 51,92 kJ/m², andererseits von 14,06 kJ/m² auf 28,07 kJ/m²), wobei sich die Bruchdehnung gar etwa verdreifacht (einerseits von 3,69% auf 13,94%, andererseits von 2,7% auf 5,6%). Die Festigkeit bleibt indes nahezu unverändert (vgl. insbesondere die Streckspannungen des reinen Polylactides von 72,92 MPa bzw. 68,91 MPa gegenüber 64,35 MPa bzw. 61,64 MPa des PLA-/PA-Blends).

Es wird vermutet, dass das im Übrigen mit Polylactid und/oder Lignin praktisch unbegrenzt mischbare und höchst kompatible Polyamid auf der Basis von Dimerfettsäure dem erfindungsgemäßen Kunststoff-Werkstoff dadurch eine einwandfreie Schlagzähigkeit bei zugleich hoher Festigkeit verleiht, weil die Polyamide auf der Basis von Dimerfettsäure die Fähigkeit besitzen, zwischen dem Amid-Stickstoff und dem Amid-Sauerstoff durch das Amid-Wasserstoffatom Wasserstoffbrücken auszubilden, wobei die NH-Gruppe als Protonendonator wirkt, während die CO-Gruppe als Protonenakzeptor wirkt. Diese Wasserstoffbrücken sichern einen Zusammenhalt der benachbarten Ketten aus Polylactid, Lignin und/oder deren Derivate, welche ihrerseits an ihren Sauerstoffgruppen (=O) bzw. Hydroxylgruppen (-OH) Wasserstoffbrückenbindungen einzugehen vermögen. Ein solchermaßen gebildeter Blend vermag folglich starke Streckvorgänge bei gleichwohl hoher, vornehmlich durch die erfindungsgemäße Naturpolymerkomponente bedingter Festigkeit zu erleiden. Darüber hinaus wird vermutet, dass die Erhöhung der Schlagzähigkeit unter anderem auch durch die relativ komplexe und überwiegend amorphe Struktur der Polyamide auf der Basis von Dimerfettsäuren verursacht wird, deren amidisierten Dimerfettsäureeinheiten verzweigt (siehe hierzu weiter unten) und folglich weniger kristallin und kompakt sind als übliche synthetische Polyamide, wie beispielsweise Polyamid-6, und insbesondere als Lignin und/oder Polylactid.

Derartige Polyamide auf der Basis von Dimerfettsäure sind als solche bekannt und finden gegenwärtig vornehmlich als Schmelzkleber Verwendung. Darüber hinaus beschreibt die DE 41 21 111 A1 einen Kunststoff-Werkstoff sowie ein Verfahren zu dessen Herstellung, welche thermomechanisch aufgeschlossene Stärke mit hierein eingemischtem Wasser sowie synthetischen Polymerverbindungen aus der Gruppe der Polyester und/oder Polyether enthält, wobei unter anderem Dimerfettsäure-Polymere zum Einsatz gelangen können. Indes eignet sich eine solche Zusammensatzung allenfalls bedingt zur Herstellung stabiler Formteile, da Stärke ein vergleichsweise hohes Wasseraufnahmevermögen bis hin zu einem Quellverhalten besitzt, wodurch sich Festigkeitsverluste und Verarbeitungsprobleme ergeben, die durch den Zusatz synthetischer Polymere nicht kompensierbar sind, zumal eine zufriedenstellende Einmischung der synthetischen Polymere in die Stärke den zusätzlichen Einsatz von Wasser erfordert.

Wie weiter unten im Einzelnen erläutert, lassen sich die erfindungsgemäß vorgesehenen Polyamide auf der Basis von Dimerfettsäure weitgehend aus natürlichen Rohstoffen gewinnen, so dass der erfindungsgemäße Kunststoff-Werkstoff im Wesentlichen gänzlich oder zumindest größtenteils aus nach-wachsenden Rohstoffen erhalten werden kann. Dabei ist der erfindungsgemäße Kunststoff-Werkstoff ebenso biologisch abbaubar wie die verwendeten Naturpolymere Polylactid, Lignin bzw. deren Derivate und/oder Mischungen bzw. Blends selbst.

Darüber hinaus wurden weitere Synergien gefunden, welche Polyamide auf der Basis von Dimerfettsäuren als hervorragenden Zusatz zu den genannten natürlichen Polymeren, nämlich Polylactide und Lignine, erscheinen lassen. So sind die genannten Polyamide insbesondere plastifizierbar und folglich thermoplastisch verarbeitbar, was ihnen die Herstellung des erfindungsgemäßen Kunststoff-Werkstoffes mittels gemeinsamen Extrudierens mit den genannten Naturpolymeren ermöglicht. Die meisten Vertreter derartiger Polyamide besitzen überdies einen Schmelzbereich, welcher unterhalb der Zersetzungstemperatur von Lignin und Polylactid liegt, wobei ihre relativ geringe Viskosität im geschmolzenen Zustand für einer sehr gute Dispergierbarkeit in die Schmelze der natürlichen Polymermatrix sorgt und die Viskosität entsprechender Polymermischungen aus den genannten natürlichen Polymeren und derartigen Polyamiden insgesamt abgesenkt werden kann. Gleichwohl werden die Werkstoffeigenschaften von Polylactid, Lignin, deren Derivaten und Mischungen durch den Zusatz der Polyamide auf der Basis von Dimerfettsäure nicht negativ beeinträchtigt. So geht beispielsweise auch die verminderte Viskosität einer Schmelze aus den recht zähflüssigen Naturpolymeren Polylactid oder Lignin mit den Polyamiden auf der Basis von Dimerfettsäure mit einer Verbesserung der Fließfähigkeit bzw. mit einer Erhöhung des Melt-Flow-Index' (MFI) einher, was die Fertigung von auch sehr dünnwandigen Bauteilen (beispielsweise durch Spritzgießen, wie Dünnwand-Spritzguss) ermöglicht. Die Polarität der Polyamide auf der Basis von Dimerfettsäuren machen sie ferner einwandfrei mit den natürlichen Polymeren verträglich und in praktisch beliebigen Massenverhältnissen mischbar.

Ein weiterer Vorteil der Polyamide auf der Basis von Dimerfettsäuren als Mischungspartner von Polylactid, Lignin, deren Derivaten und Mischungen besteht darin, dass erstere im Vergleich zu anderen Polyamiden ein nur geringes Wasseraufnahmevermögen besitzen, so dass eine gewisse Hydrolyseanfälligkeit von Naturpolymeren im Allgemeinen herabgesetzt wird. Die sehr geringe Temperaturkriechneigung der Dimerfettsäure-basierten Polyamide wirkt sich überdies synergistisch mit Verstärkungsadditiven, wie z.B. Naturfasern, positiv auf die Wärmeformbeständigkeit von Polylactid aus, wobei diese von etwa 50°C (bei reinem Polylactid) auf Temperaturen bis oberhalb 100°C erhöht werden kann.

Ein weiterer Vorteil der Polyamide auf der Basis von Dimerfettsäure als Mischungspartner von Polylactid, Lignin, deren Derivate und Mischungen besteht darin, dass die Barriereeigenschaften der genannten Naturpolymere, wie insbesondere von reinem Polylactid, welches nur sehr geringe Barriereeigenschaften insbesondere gegenüber Wasserdampf oder Sauerstoff aufweist, in einem solchen Maße erhöht werden können, dass aus dem erfindungsgemäßen Kunststoff-Werkstoff gefertigte Verpackungsmaterialien zur im Wesentlichen gasdichten Verpackung von Lebensmitteln oder anderen Gütern verwendet werden können, welche hohen Anforderungen an die Hygiene genügen müssen.

Die plastifizierbare Kunststoffmatrix, welche einen Anteil an wenigstens einem natürlichen Polymer aus der Gruppe Polylactid und Lignin einschließlich deren Mischungen und Derivaten sowie einen Anteil an wenigstens einem Polyamid auf der Basis von Dimerfettsäure enthält, bietet sich ferner insbesondere als thermoplastische Polymermatrix des erfindungsgemäßen thermoplastischen Elastomers an, weshalb die Erfindung vorsieht, dass der Kunststoff-Werkstoff ein thermoplastischer Elastomer-Werkstoff ist und ferner einen Anteil an hierin eindispergiertem Kautschuk enthält.

Thermoplastische Elastomere (TPE), welche auch als "Elastoplaste" bezeichnet werden, sind in verschiedenen Ausgestaltungen bekannt. Sie zeichnen sich dadurch aus, dass sie zwar - ähnlich klassischen Elastomeren - bei Raumtemperatur elastisch verformbar, aber gleichwohl unter Wärmeeinwirkung plastifizierbar sind, um sich mit thermoplastischen Verarbeitungsverfahren, wie Extrudieren, Spritzgießen, Heißpressen etc., verarbeiten zu lassen. Thermoplastische Elastomere lassen sich entsprechend ihres molekularen Aufbaus in Blockcopolymere und Elastomerlegierungen untergliedern. Bei erstgenannten Blockcopolymeren handelt es sich um Polymere, welche sowohl weiche bzw. elastische Segmentabschnitte mit hoher Dehnbarkeit als auch harte, kristalline Segmentabschnitte mit geringer Dehnbarkeit aufweisen. Beispiele solcher thermoplastischer Elastomere umfassen Copolymere von Styrol mit Butadien (SBS), Isopren (SIS) oder Ethylenbutylen (SEBS). Bei Elastomerlegierungen handelt es sich um Polymer-Blends aus wenigstens zwei verschiedenen Polymeren, welche z.B. ein in eine thermoplastische Polymermatrix eingebettetes Elastomer aufweisen. Beispiele solcher Elastomerlegierungen umfassen vernetzten Ethylen-Propylen-DienKautschuk (EPDM), Nitrilkautschuk (NBR) oder Naturkautschuk (NR) in Polypropylen (PP) oder Ethylenvinylacetat (EVA) in Vinylidenchlorid (PVdC).

Gegenwärtig bekannte thermoplastische Elastomere sind praktisch ausschließlich aus synthetischen Polymeren gefertigt, wobei im Falle von Elastomerlegierungen insbesondere die thermoplastische Phase aus petrochemischen Produkten erzeugt wird, während als elastomere Phase neben synthetischen Polymeren und Kautschuken auch Naturkautschuk eingesetzt wird. Im Zuge der Verknappung von fossilen Rohstoffen, wie sie zur Herstellung von synthetischen Polymeren vornehmlich eingesetzt werden, besteht folglich auch insoweit ein zunehmender Bedarf an einer Substitution von synthetischen Polymeren durch natürliche Polymere auf der Basis nachwachsender Rohstoffe. Dem begegnet die Erfindung dadurch, dass ein thermoplastischer Elastomer-Werkstoff zur Verfügung gestellt werden kann, welcher unter Gewährleistung des von herkömmlichen thermoplastischen Elastomeren bekannten elastischen Rückstellvermögens sowie einer thermoplastischen Verarbeitbarkeit zumindest überwiegend aus nachwachsenden Rohstoffen gewonnen werden kann.

Wie bereits angedeutet, können die Polymere der thermoplastischen Phase eines solchen thermoplastischen Elastomer-Werkstoffes - oder genauer: der thermoplastischen Elastomerlegierung - entweder in im Wesentlichen reiner Form und insbesondere unter Zusatz von Weichmachern (siehe hierzu weiter unten) oder ähnlichen Verarbeitungshilfsmitteln, oder insbesondere auch in Form von Polymer-Blends vorliegen, welche auch gänzlich ohne den Zusatz von Weichmachern auskommen können. In diesem Zusammenhang wurde in Bezug auf die erfindungsgemäß eingesetzten Naturpolymere Polylactid, Lignin, deren Derivate und/oder Mischungen in Kombination mit wenigstens einem Polyamid auf der Basis von Dimerfettsäure gefunden, dass sie mit dem für die elastische Phase verwendeten Kautschuk hervorragend kompatibel sind und auch insbesondere eine nachträgliche Vernetzung bzw. Vulkanisierung des Kautschuks unter Erhalt der gewünschten dauerelastischen Eigenschaften ermöglichen. Die hohe Verträglichkeit der thermoplastischen Polymermatrix mit dem Kautschuk beruht nicht zuletzt auf dem gegenüber Polylactid, Lignin, deren Derivaten und Mischungen unpolarerem Zusatz an dem wenigstens einen Polyamid auf der Basis von Dimerfettsäure, wobei in verarbeitungstechnischer Hinsicht ferner eine im Vergleich zu den reinen, gegebenenfalls mit Weichmachern versetzten Naturpolymeren/Polyamiden auf der Basis von Dimerfettsäure verbesserte Heißentformbarkeit von aus dem Kunststoff-Werkstoff erzeugten Formteilen gegeben ist, was insbesondere dann gilt, wenn der Kautschuk zumindest teilweise vernetzt worden ist (siehe hierzu weiter unten). Die erfindungsgemäßen thermoplastischen Elastomere zeichnen sich ferner durch hervorragende Werkstoffeigenschaften aus, wie insbesondere durch eine hohe Reißfestigkeit und Elastizität.

In vorteilhafter Ausgestaltung ist vorgesehen, dass der die elastische Phase des thermoplastischen Elastomer-Werkstoffes bildende Kautschuk Naturkautschuk (NR, Polyisopren) ist, wobei er in flüssiger bzw. viskoser Form oder auch in Pulverform eingesetzt werden kann. Naturkautschuk basiert auf pflanzlichem Latex, welches vorwiegend aus dem Kautschukbaum (*Hevea brasiliensis*) gewonnen werden kann. Bei weiteren Typen von Naturkautschuk, welche bei dem erfindungsgemäßen thermoplastischen Elastomer-Werkstoff zum Einsatz gelangen können, handelt es sich beispielsweise um Balata (gewonnen aus dem Balatabaum), Chicle-Gummi (gewonnen aus dem Breiapfelbaum, Sapote, *Manilkara zapota*), Guttapercha (gewonnen aus dem Guttaperchabaum, *Palaquium gutta*) oder Guayule-Kautschuk (gewonnen aus Guayule, *Parthenium argentatum*). Ferner ist es möglich, aus Löwenzahn, insbesondere aus dem Russischen Löwenzahn (*Taraxacum koksaghyz*), Naturkautschuk zu gewinnen, wobei es inzwischen auch gelungen ist, den dieser Kautschukart immanenten Nachteil, dass der Löwenzahn-Kautschuk unmittelbar nach Austritt aus der Pflanze unter Sauerstoffkontakt polymerisiert, zu eliminieren, indem man das Enzym, welches für die schnelle Polymerisation verantwortlich ist, auf gentechnischem Wege ausschaltet. Darüber hinaus ist es auch denkbar, einen EPDM-Kautschuk einzusetzen, welcher aus nachwachsenden Rohstoffen gewonnen werden kann, wie aus beispielsweise aus Zuckerrohr erhaltenem Bioethanol, welcher zu biobasiertem Ethylen (Ethen) umgewandelt werden kann. Derartige Kautschuke sind bekannt, z.B. unter dem Handelsnamen "Keltan Eco" des Herstellers Lanxess.

Wie bereits angedeutet, kann gemäß einer vorteilhaften Ausführungsform des erfindungsgemäßen thermoplastischen Elastomer-Werkstoffes vorgesehen sein, dass er in Form eines Polymer-Blends vorliegt, d.h. das Polylactid und/oder Lignin bzw. deren Blends und/oder Derivate und das Polyamid auf der Basis von Dimerfettsäure bilden eine reine Polymermischung, ohne kovalent aneinander gebunden zu sein. Alternativ ist es selbstverständlich denkbar, dass insbesondere im Falle der Herstellung eines Polymer-Formteils aus dem erfindungsgemäßen Kunststoff-Werkstoff der Polyamidanteil untereinander und/oder mit dem natürlichen Polymer (teil)vernetzt wird, was beispielsweise durch vorherigen Zusatz geeigneter Vernetzungsmittel geschehen kann, welche nachträglich, z.B. mittels elektromagnetischer Strahlung, aktiviert werden können.

Wie ebenfalls bereits erwähnt, kann das Mischungsverhältnis von Polylactid und/oder Lignin bzw. deren Blends und/oder Derivate mit dem Polyamid auf der Basis von Dimerfettsäure in praktisch beliebigen Anteilen gewählt werden, wobei vorteilhafte Anteile an Polyamid auf der Basis von Dimerfettsäure des Kunststoff-Werkstoffes beispielsweise zwischen 5 Mass.-% und 80 Mass.-%, insbesondere zwischen 10 Mass.-% und 65 Mass.-%, vorzugsweise zwischen 20 Mass.-% und 50 Mass.-%, betragen können, jeweils bezogen auf die gesamte Polymermatrix aus sowohl Polylactid, Lignin, deren Derivate oder Mischungen als auch dem Polyamid auf der Basis von Dimerfettsäure.

In vorteilhafter Ausgestaltung kann vorgesehen sein, dass das Polyamid cyclische und/oder acyclische Dimerfettsäureeinheiten aufweist, welche durch Dimerisierung von ungesättigten Fettsäuren mit zwischen 10 und 30 Kohlenstoffatomen oder deren Gemische erhalten worden sind (d.h. das Dimer weist dann die doppelte Anzahl an Kohlenstoffatomen, nämlich vorzugsweise zwischen 20 und 60 auf), insbesondere aus der Gruppe Oleinsäure (cis-9-Octadecensäure) und Erucasäure (cis-13-Docosensäure).

Unter "Dimerfettsäuren" sind im Zusammenhang mit der vorliegenden Erfindung oligomere Fettsäuren angesprochen, welche in als solcher bekannten Weise durch thermische und/oder katalytische Dimerisierung von ungesättigten Fettsäuren synthetisiert werden können. Im Zuge einer solchen Dimerisierung werden zwei (oder auch drei) ungesättigte Fettsäuren miteinander verknüpft, wobei solche Trimere sowie auch nicht umgesetzte Monomere abgetrennt werden können, z.B. mittels thermischer Trennverfahren, wie Destillation oder Rektifikation. Die erhaltenen Dimere sind verzweigt und können cyclisch oder acyclisch sein, wobei nachfolgend beispielhafte Strukturformeln solcher, durch Dimerisierung von (hier einfach) ungesättigten Fettsäuren erhaltenen Dimerfettsäuren dargestellt sind: 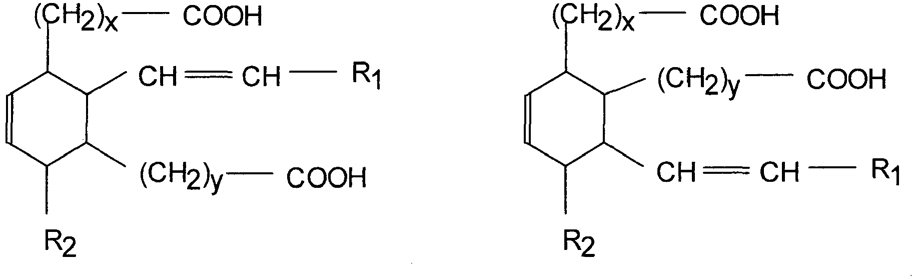 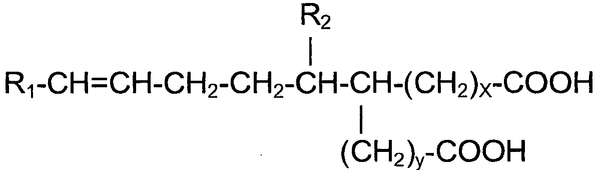 Mit "cyclischen und/oder acyclischen Dimerfettsäureeinheiten" des für den erfindungsgemäßen Kunststoff-Werkstoff eingesetzten Polyamides sind folglich derartige Dimerfettsäuren angesprochen, deren Carboxygruppen (COOH-) durch Reaktion mit Aminogruppen zu Amidgruppen (-CO-NH-) umgesetzt worden sind.

Wie bereits angesprochen, besteht der erfindungsgemäße thermoplastische Elastomer-Werkstoff vorzugsweise weitgehend aus nachwachsenden Rohstoffen, weshalb in bevorzugter Ausführung Dimere aus natürlichen Fettsäuren, wie beispielsweise Oleinsäure (Ölsäure, cis-9-Octadecensäure, C₁₈H₃₄O₂, CAS-Nr. 112-80-1) und Erucasäure (Erukasäure, cis-13-Docosensäure, C₂₂H₄₂O₂, CAS-Nr. 112-86-7), eingesetzt werden können. Selbstverständlich können indes auch andere, einfach oder auch mehrfach ungesättigte Fettsäuren, wie beispielsweise Palmitoleinsäure, Linolensäure, Arachidonsäure etc., für die Dimerfettsäuren eingesetzt werden. Solche natürlichen Fettsäuren können z.B. aus den Samen von Soja, Raps, Sonnenblumen, Meerkohl, Hanf, Leinsamen, Walnuss und dergleichen gewonnen werden.

Was die mit den Dimerfettsäureeinheiten unter Bildung der Amidgruppen (-CO-NH-) verbundenen Amineinheiten des erfindungsgemäßen Kunststoff-Werkstoffes betrifft, so kommen grundsätzlich praktisch beliebige Amineinheiten in Betracht, wobei das Polyamid insbesondere Diamineinheiten aufweisen kann, welche vorzugsweise aus der Gruppe der Alkylendiamine mit endständigen Aminogruppen und/oder der Polyetherdiamine mit endständigen Aminogruppen gewählt sein können. Mit "Diamineinheiten" des für den erfindungsgemäßen thermoplastischen Elastomer-Werkstoff eingesetzten Polyamides sind folglich Einheiten mit zwei Aminogruppen angesprochen, welche durch Reaktion mit den Carboxygruppen (COOH-) der Dimerfettsäureeinheiten zu Amidgruppen (-CO-NH-) umgesetzt worden sind. Beispiele solcher Diamineinheiten umfassen Ethylendiamin, 1,3-Diaminopropan, 1,4-Diaminobutan, 1,5-Diaminopentan, Hexamethylendiamin etc. oder auch Polyetherdiamine der allgemeinen Formel H₂N-R₁-O-(P₂O_{X})-R₃-NH₂, wobei die Kohlenwasserstoffreste R₁ und R₃ vorzugsweise gleiche oder verschiedene aliphatische und/oder cycloaliphatische Kohlenwasserstoffgruppen mit insbesondere zwischen 2 und 8 Kohlenstoffatomen und der Kohlenwasserstoffrest R₂ vorzugsweise eine - gegebenenfalls verzweigte - Kohlenwasserstoffgruppe mit insbesondere zwischen 1 und 6 Kohlenstoffatomen sein kann.

In weiterhin vorteilhafter Ausgestaltung kann vorgesehen sein, dass das Polyamid auf der Basis von Dimerfettsäure eine Erweichungstemperatur zwischen 80°C und 210°C, insbesondere zwischen 100°C und 190°, vorzugsweise zwischen 120°C und 170°C, aufweist. Die Erweichungstemperatur liegt folglich vorzugsweise im Bereich des Schmelzpunktes des jeweiligen natürlichen Polymers Polylactid, Lignin, deren Derivate oder Mischungen im Bereich von etwa 150°C, so dass ein gemeinsames Aufschmelzen und Vermischen des/der natürlichen Polymer(e) Polylactid und Lignin bzw. deren Blends und/oder Derivate mit dem Polyamid auf der Basis von Dimerfettsäure, beispielsweise in einem Extruder, problemlos möglich ist. In Bezug auf das Herstellungsverfahren des erfindungsgemäßen thermoplastischen Elastomer-Werkstoffes, insbesondere zu einem thermoplastisch verarbeitbaren Granulat, kann folglich eine Verarbeitungstemperatur in einem Extruder von zwischen etwa 160°C und etwa 250°C, vorzugsweise zwischen etwa 170°C und etwa 240°C, z.B. zwischen etwa 180°C und etwa 230°C, eingestellt werden, wie es auch für die reinen natürlichen Polymere zweckmäßig ist. Letztere besitzen in dem genannten Temperaturbereich einerseits eine hinreichend geringe, zum Eindispergieren eines feinpartikulären Feststoffes geeignete Viskosität, während andererseits thermische Schädigungen zuverlässig vermieden werden.

Während das Polyamid auf der Basis von Dimerfettsäure eine Dichte zwischen 0,95 g/cm³ und 1,0 g/cm³, insbesondere im Bereich von 0,98 g/cm³, aufweisen kann, kann es im Hinblick auf eine einwandfreie Vermischung mit Polylactid, Lignin bzw. deren Blends und/oder Derivaten im plastifizierten bzw. geschmolzenen Zustand ferner vorzugsweise eine Schmelzviskosität zwischen 2500 mPas und 30000 mPas, insbesondere zwischen 5000 mPas und 27500 mPas, bei 180°C aufweisen.

Gemäß einer Weiterbildung kann vorgesehen sein, dass der thermoplastische Elastomer-Werkstoff ferner wenigstens einen feinpartikulären Feststoff, insbesondere mit einer Partikelgröße zwischen 0,5 µm und 50 µm, vorzugsweise zwischen 0,5 µm und 10 µm, enthält. Ein solcher partikelförmiger Feststoff kann vorzugsweise aus der Gruppe der mineralischen Feststoffe, insbesondere aus der Gruppe der Schichtsilikate, beispielsweise Talk (Magnesiumsilikathydrat, Mg₃[Si₄O₁₀(OH)₂]), gewählt sein. Ein derartiger feinpartikulärer Feststoff, welcher zweckmäßig mit einem Anteil von wenigstens 0,5 Mass.-%, insbesondere von wenigstens 1 Mass.-%, bezogen auf die Masse der gesamten Polymermatrix in dieser enthalten sein sollte, vermag insbesondere bei dem natürlichen Polymer Polylactid bei geeigneter Verfahrensführung während der Herstellung eines Polymer-Formteils hieraus die Wärmeformbeständigkeit (ermittelt nach HDT/B gemäß der Norm DIN EN ISO 75-1,-2) des erzeugten Polymer-Formteils weiter zu erhöhen, sofern die Polymermatrix mit dem hierin eindispergierten Feststoff über einen Zeitraum von wenigstens etwa 2 s auf einer Temperatur zwischen 70°C und 120° gehalten wird, wonach die Polymermatrix unter Bildung des fertigen Formteils vollständig abgekühlt bzw. erstarrt werden kann. Der feinpartikuläre Feststoff aus der genannten Stoffgruppe vermag hierbei als Nukleierungsmittel zu dienen und sorgt ferner für eine hohe Kristallinität insbesondere des Polylactidanteils der Polymermatrix, welche als Ursache für die Erhöhung der Wärmeformbeständigkeit (ermittelt nach HDT/B gemäß der Norm DIN EN ISO 75-1,-2) um etwa 40°C bis 70°C vermutet wird. In diesem Zusammenhang sei auf die zum Prioritätsdatum der vorliegenden Erfindung noch nicht veröffentlichte deutsche Patentanmeldung DE 10 2010 052 878.1 verwiesen.

Der erfindungsgemäße thermoplastische Elastomer-Werkstoff kann ferner Verstärkungsfasern enthalten, welche aus Gründen einer hohen Umweltverträglichkeit vorzugsweise aus der Gruppe der Naturfasern gewählt sein können. Je nach den geforderten Werkstoffeigenschaften des Kunststoff-Werkstoffes kommen hierbei im Prinzip beliebige Naturfasern in Frage, wobei die Naturfasern aufgrund ihrer verhältnismäßig hohen Festigkeit vorzugsweise aus der Gruppe Hanf, Flachs, Kenaf, Sisal, Kokos, Ramie, Miscanthus, Nessel, Baumwoll, Cellulose, Palm, Schilfgras und Holzfasern ausgewählt werden können. Indes kommen selbstverständlich grundsätzlich auch andere Naturfasern sowie synthetische oder mineralische Fasern, wie Glas-, Aramid-, Carbonfasern und dergleichen in Betracht. Insbesondere im Falle des Einsatzes von Naturfasern hat sich gezeigt, dass diese hervorragend von der plastifizierten Polymermatrix aus Lignin, Polylactid, deren Derivate und Mischungen und dem Polyamid auf der Basis von Dimerfettsäure benetzt werden, wobei vor allem das Polyamid aufgrund seiner hohen Affinität zu natürlichen Fasern infolge seines polaren Aufbaus und seiner geringen Hydrolyseanfälligkeit als Haftvermittler zu den Naturfasern zu wirken vermag, was wiederum zu einer hohen Festigkeit eines faserverstärkten Polymer-Formteils aus einem erfindungsgemäßen Kunststoff-Werkstoff beiträgt.

An dieser Stelle sei grundsätzlich darauf hingewiesen, dass die Polymermatrix des erfindungsgemäßen thermoplastischen Elastomer-Werkstoffes mehr oder minder gänzlich aus Polylactid und/oder Lignin einschließlich deren Blends und/oder Derivaten und dem Polyamid auf der Basis von Dimerfettsäuren gebildet sein kann, aber selbstverständlich auch weitere, aus den eingangs genannten Gründen vorzugsweise zumindest überwiegend aus nachwachsenden Rohstoffen gewonnene Polymere, insbesondere ebenfalls in Form eines Polymer-Blends bzw. einer Polymermischung, enthalten kann, wie z.B. Bio-Polyethylen, Polyamid 6.6 oder Polyamid 6.10 (z.B. mit aus Ricinusöl gewonnener Sebacinsäure) etc. Selbstverständlich kann die Polymermatrix darüber hinaus gegebenenfalls übliche Additive oder Zusatzstoffe enthalten, wie Farbstoffe, Pigmente, Antioxidantien, Füllstoffe, Haftvermittler und dergleichen. In Bezug auf vorteilhafte Weichmacher sei auf die Ausführungen weiter unten verwiesen.

Der Anteil der thermoplastischen Phase (Polyamid, Lignin, deren Mischungen und/oder Derivate in Kombination mit dem wenigstens einen Polyamid auf der Basis von Dimerfettsäure) des thermoplastischen Elastomer-Werkstoffes kann je nach der gewünschten Elastizität in weiten Bereich variiert werden. So kann der Anteil an Polylactid, Lignin, deren Derivate und/oder Mischungen einschließlich den Anteils an den Polyamiden auf der Basis von Dimerfettsäure beispielsweise zwischen 10 phr und 300 phr, insbesondere zwischen 20 phr und 200 phr, z.B. zwischen etwa 25 phr und etwa 100 phr, gewählt sein. Die hierbei verwendete Einheit [phr] bedeutet "per hundred rubber" und bezieht sich auf den Massenanteil der thermoplastischen Phase pro 100 Massenanteilen Kautschuk. "10 phr" bedeutet folglich 10 Massenanteile thermoplastischer Polymerphase pro 100 Massenanteilen Kautschuk.

Während dem erfindungsgemäßen thermoplastischen Elastomer-Werkstoff ein Vernetzungs- bzw. Vulkanisierungsmittel für den Kautschuk grundsätzlich auch erst anlässlich seiner thermoplastischen Verarbeitung zu einem Polymer-Formteil zugesetzt werden kann, kann gemäß einer vorteilhaften Ausgestaltung vorgesehen sein, dass er ferner wenigstens ein thermisch und/oder mittels Strahlung aktivierbares Vernetzungsmittel enthält. Ein solches Vernetzungsmittel kann vorzugsweise eine Aktivierungstemperatur zwischen etwa 120°C und etwa 220°C, insbesondere zwischen etwa 150°C und etwa 210°C, aufweisen, d.h. im Bereich der Verarbeitungstemperatur der thermoplastischen Phase, wobei eine Vernetzung des Kautschuks selbstverständlich auch nachträglich, beispielsweise unter Bestrahlung mit hochfrequenter elektromagnetischer Strahlung, insbesondere im Mikrowellenbereich oder im ultravioletten Bereich (UV), oder auch mittels Elektronenstrahlung (β-Strahlung) oder Röntgenstrahlung (γ-Strahlung), durchgeführt werden kann.

Als Vernetzungsmittel kommen grundsätzlich beliebige bekannte Vernetzungs- bzw. Vulkanisierungsmittel in Betracht, wie beispielsweise solche aus der Gruppe der Peroxide, Phenolharze, Silane, der Schwefel spendenden Substanzen, insbesondere aus der Gruppe Schwefel, Schwefelhalogenide, Thiocarbamate, Thioharnstoffe, Thiurame, Dithiophosphate, Guanidine, Mercaptobenzothiazole und Benzothiazolylsulfenamide, und Metalloxide. Beispiele geeigneter Vernetzungsmittel umfassen Schwefel einschließlich Schwefel freisetzender Verbindungen, wie Schwefelchlorid (SCl₂), Dischwefeldichlorid (S₂Cl₂), Thiurammono- und -disulfide, Zinkbenzyldithiocarbamat (ZBEC), Tetramethylthiuramdisulfid (TMTD), Zinkdibenzyldithiocarbamat (ZBEC), 2,5-Bis-(ter-tiärbutylperoxy)-2,5-dimethylhexan, 2,5-Bis-(tertiärbutyl-peroxy)-2,5-dimethyl-3-hexin, 1,1-Di(tertiärbutylperoxy)-3,3,5-trimethylcyclohexan und dergleichen, sowie Zinkoxid (ZnO) etc. Ferner können übliche Beschleuniger, wie beispielsweise 2-Mercaptobenzothiazol, eingesetzt werden.

Wie oben erwähnt, kann der erfindungsgemäße Kunststoff-Werkstoff vorzugsweise wenigstens einen Weichmacher enthalten, welcher bei dem mit Kautschuk versetzten thermoplastischen Elastomer-Werkstoff beispielsweise in einem Anteil zwischen 0,1 phr und 30 phr, vorzugsweise zwischen 0,5 phr und 20 phr, enthalten sein kann, um die thermoplastische Verarbeitbarkeit sowie insbesondere die Schlagzähigkeit eines aus dem erfindungsgemäßen thermoplastischen Elastomer-Werkstoff erzeugten Polymer-Formteils weiter zu verbessern bzw. bedarfsweise zu modifizieren.

Während als Weichmacher grundsätzlich beliebige bekannte Weichmacher einschließlich synthetischer Weichmacher, wie beispielsweise Phosphorsäureester (z.B. Trialkylphosphate, Triphenylphosphat, Tricresylphosphat, Cresyldiphenylphosphat, 2-Ethylhexyldiphenylphosphat etc.), Triphenylphosphinoxid, Trimellitsäure, Trimellitsäureester (z.B. Trialkylmellitate), o-, m- und p-Phthalsäure, Phthalsäureester (z.B. Dialkylphthalate, Butylbenzylphthalat, Ethylenglykolmonoethylphthalat etc.), Benzoesäure, Benzolsulfonsäure, Acrylsäure und dergleichen zum Einsatz gelangen können, kann gemäß einer vorteilhaften Ausgestaltung vorgesehen sein, dass der thermoplastische Elastomer-Werkstoff einen Weichmacher aus der Gruppe der natürlichen Öle und Wachse, der natürlichen aliphatischen Mono-, Di- und Tricarbonsäuren einschließlich deren Salzen und Estern, insbesondere deren Glyceriden, und der vernetzten ungesättigten Pflanzenöle enthält, welche aus nachwachsenden Rohstoffen gewonnen werden können. Die Wirkungsweise solcher nativer Öle und Wachse entspricht einerseits derjenigen bekannter synthetischer Weichmacher, welche lediglich aufgrund ihrer Lösungs- bzw. Quellmitteleigenschaften ohne chemische Reaktion mit dem Polymer in physikalische Wechselwirkung treten und ein homogenes System mit diesem bilden. Dadurch verleihen sie der thermoplastischen Polymermatrix bessere physikalische Eigenschaften, z. B. eine niedrigere Schmelztemperatur, ein erhöhtes Formveränderungsvermögen, erhöhte elastische Eigenschaften, eine geringere Sprödigkeit, sowie gegebenenfalls ein erhöhtes Haftvermögen. Im Gegensatz zu synthetischen Weichmachern bestehen native Öle und Wachse im Wesentlichen aus höhermolekularen Fettsäuren bzw. Estern höhermolekularer Fettsäuren, wie Glyceride, und sind nicht oder nur wenig toxisch. Solche, aus nachwachsenden Rohstoffen gewonnene Weichmacher weisen weiterhin eine ökologisch neutrale CO₂-Bilanz auf und sind leicht biologisch abbaubar bzw. verrottbar.

Beispiele von Weichmachern in Form von natürlichen Ölen einschließlich ätherischer Öle umfassen Raps-, Distel-, Sonnenblumen-, Hanföl oder Minzöle (Menthol) und dergleichen. Beispiele von Weichmachern in Form von natürlichen Wachsen umfassen tierische native Wachse, wie Bienenwachs, Schellackwachs, Lanolin und dergleichen, oder pflanzliche native Wachse, wie Carnaubawachs, Montanwachs, Japanwachs, Reiskeimölwachs und dergleichen. Alternativ können als Weichmacher auch chemisch modifizierte native Wachse, wie z. B. Jojobawachse, Montanesterwachse, Sasolwachse etc., verwendet werden. Weitere Beispiele für natürliche Weichmacher umfassen aliphatische Monocarbonsäuren, wie gesättigte Fettsäuren, vorzugsweise mit zwischen 2 und 18 Kohlenstoffatomen, Stearinsäure, Linolsäure, Linolensäure, Ricinolsäure, Ölsäure und dergleichen einschließlich deren Salzen und Estern (z.B. 12-Hydroxyacetyl-9-octadecensäuremethylester), aliphatische Dicarbonsäuren, wie Glutarsäure, Adipinsäure, Azelainsäure, Sebacinsäure und dergleichen einschließlich deren Salzen und Estern (z.B. Di-(2-ethylhexyl)azelat), aliphatische Tricarbonsäuren, wie Citronensäure, einschließlich deren Salzen und Estern (z.B. Citrate in Form von Mono-, Di- und Triestern mit gleichen oder gemischten Estergruppen) und dergleichen, sowie Glyceride in Form von Mono-, Di- oder Triestern (z.B. Glycerintriacetat, Glycerintripropionat etc.) mit gleichen oder gemischten Estergruppen, insbesondere mit solchen Esterrestgruppen mit linearen und verzweigten aliphatischen Alkylgruppen sowie mit olefinischen Restgruppen, vorzugsweise mit zwischen 2 und 36 Kohlenstoffatomen in den jeweiligen Alkylketten. Beispiele für natürliche Weichmacher in Form von vernetzten ungesättigten Pflanzenölen, welche auch als "Faktis" oder "Ölkautschuk" bezeichnet werden, umfassen vernetzte Pflanzenöle in Form von Rinzinusöl, Rapsöl, Rüböl, Sojaöl und dergleichen, wobei die Vernetzung solcher Pflanzenöle ähnlich wie die Vernetzung von Kautschuk durch bekannte Vernetzungsmittel, wie z.B. solcher auf Basis von Schwefel, Peroxiden oder Isocyanatgruppen, geschehen kann. In diesem Zusammenhang sei darauf hingewiesen, dass grundsätzlich auch ein Einsatz von Faktis bzw. Ölkautschuk möglich ist, welcher zumindest anteilig durch Vernetzung von ungesättigten Mineralölen erhalten worden ist.

Wie bereits erwähnt, kann der thermoplastische Elastomer-Werkstoff ferner Füllstoffe und/oder Verstärkungsfasern, insbesondere aus der Gruppe der mineralischen Füllstoffe und/oder Naturfasern, enthalten. Je nach den geforderten Werkstoffeigenschaften des Werkstoffes kommen hierbei im Prinzip beliebige Naturfasern in Frage, wobei die Naturfasern aufgrund ihrer verhältnismäßig hohen Festigkeit vorzugsweise aus der Gruppe Hanf, Flachs, Kenaf, Sisal, Kokos, Ramie, Miscanthus, Nessel, Baumwoll, Cellulose, Palm, Schilfgras und Holzfasern ausgewählt werden können. Indes kommen selbstverständlich grundsätzlich auch andere Naturfasern sowie synthetische oder mineralische Fasern, wie Glas-, Aramid-, Carbonfasern und dergleichen in Betracht. Desgleichen können Füllstoffe, z.B. auf mineralischer Basis, wie beispielsweise Talk (Magnesiumsilikathydrat), Diatomeenerde (Kieselgur), Kreide, Kalk, Gips etc., enthalten sein.

Wie bereits angedeutet, kann der erfindungsgemäße thermoplastische Elastomer-Werkstoff vorzugsweise in Granulatform vorliegen, wobei ein solches Granulat gegebenenfalls auch etwaige partikel- und/oder faserförmige Füll- oder Verstärkungsstoffe sowie etwaige Additive bereits enthalten kann, so dass eine einfache Verarbeitung des Kunststoff-Werkstoffes zu Formteilen mittels herkömmlicher thermoplastischer Verarbeitungsverfahren, wie Extrudieren, Spritzgießen und dergleichen, möglich ist.

In Bezug auf den erfindungsgemäßen Kautschuk enthaltenden, thermoplastischen Elastomer-Werkstoff kann in weiterhin vorteilhafter Ausgestaltung vorgesehen sein, dass der Kautschuk zumindest teilweise vernetzt vorliegt, d.h. der insbesondere in Granulatform vorliegende Werkstoff besitzt eine thermoplastische Polymermatrix, in welcher die elastomere Kautschukphase bereits zumindest teilweise vulkanisiert worden ist. Indes kann die Kautschukphase auch noch weitgehend unvernetzt sein und erst im Rahmen der Verarbeitung des thermoplastischen Elastomer-Werkstoffes mittels thermoplastischer Verarbeitungsverfahren, insbesondere unter thermischer Aktivierung bereits vorhandener Vernetzungs- bzw. Vulkanisierungsmittel (siehe hierzu weiter oben), vernetzt bzw. vulkanisiert werden, oder es kann alternativ oder zusätzlich eine Nachvernetzung der Kautschukphase im fertigen Polymer-Formteil, insbesondere unter Aktivierung mittels Bestrahlung (siehe hierzu ebenfalls weiter oben) stattfinden.

Die aus einem erfindungsgemäßen thermoplastischen Elastomer-Werkstoff herstellbaren Polymer-Formteile sind folglich zumindest über-wiegend, vorzugsweise gänzlich, aus natürlichen bzw. nach-wachsenden Rohstoffen gebildet, gesundheitlich unbedenklich und weisen nicht nur eine hohe Steifigkeit, sondern auch eine gegenüber den jeweils reinen Naturpolymeren deutlich höhere Schlagzähigkeit und - im Falle von Polylactid - Wärmeformbeständigkeit auf, welche ihnen einen Einsatz in Form von praktisch beliebigen konstruktiven und technischen Teilen oder in Form von Gebrauchsgegenständen einschließlich Spielzeug sowie Verpackungsmaterialien und -folien erschließt. Wie bereits erwähnt, erhöht der Anteil des Polyamides auf der Basis von Dimerfettsäure die Barriereeigenschaften des Werkstoffes gegenüber Wasser(dampf) und Sauerstoff, was im Falle einer Verarbeitung zu Verpackungsmaterialien in Form von mehr oder minder formhaltigen Teilen oder auch flexiblen Folien günstig ist. Der Anteil an dem genannten Polyamid sorgt ferner für eine gegenüber dem reinen Naturpolymer weichere Haptik sowie - im Falle von Folien - für eine weitestgehende Geräuschreduktion bei Verformungen, wobei übliche "Raschelgeräusche", wie sie vornehmlich bei herkömmlichen, aus Polylactid gefertigten Folien auftreten, weitestgehend vermieden werden. Schließlich sind aus dem erfindungsgemäßen thermoplastischen Elastomer-Werkstoff erzeugte Polymer-Formteile einfach entformbar, ohne dass es zu einer unerwünschten Anhaftung bzw. zu einem "Ankleben" derselben an die Wandung des jeweiligen Formwerkzeugs kommt. Aufgrund des erfindungsgemäßen Anteils an Kautschuk besitzt das Polymer-Formteil ferner elastische Werkstoffeigenschaften, wobei erfindungsgemäße Polymer-Formteile beispielsweise auch in Form von praktisch beliebigen konstruktiven und technischen Teilen oder in Form von Gebrauchsgegenständen ausgebildet sein können, wie beispielsweise als Haushalts- und Hygieneartikel (z.B. Zahnbürsten etc.), einschließlich Spielzeug (z.B. Figuren etc.) sowie Verpackungsmaterialien und -folien. Der Anteil an der elastomeren Kautschukphase sorgt hierbei für eine gegenüber der thermoplastischen Phase deutlich weichere Haptik sowie insgesamt für eine elastische Verformbarkeit der ansonsten überwiegend eher formhaltigen thermoplastischen Phase.

Wie oben erwähnt, lässt sich der erfindungsgemäße thermoplastische Elastomer-Werkstoff auf einfache Weise durch übliche thermoplastische Verarbeitungsverfahren erzeugen, wobei der thermoplastischen Phase ein Anteil an Kautschuk zugesetzt bzw. letzterer in die thermoplastische Phase möglichst homogen eindispergiert wird.

Ein erfindungsgemäßes Verfahren zur Herstellung eines solchen thermoplastischen Elastomer-Werkstoffes kann insbesondere in einem einstufigen oder in einem mehrstufigen, insbesondere zweistufigen, Prozess durchgeführt werden. Sofern zur Herstellung ein zweistufiger Prozess gewählt wird, kann vorzugsweise vorgesehen sein, dass das wenigstens eine natürliche Polymer aus der Gruppe Polylactid und Lignin einschließlich deren Mischungen und/oder Derivaten und das wenigstens eine Polyamid auf der Basis von Dimerfettsäure zunächst plastifiziert und homogenisiert wird, wonach der Kautschuk in das Plastifikat eindispergiert wird. Die thermoplastische Phase kann hierbei in einer ersten Prozessstufe mit dem flüssigen, viskosen oder auch partikelförmigen Kautschuk sowie vorzugsweise auch mit den Weichmachern, Vernetzungsmitteln und gegebenenfalls weiteren Additiven, Füllstoffen und/oder Verstärkungsfasern, z.B. in einem Kneter, bei einer relativ geringen Temperatur, bei welcher noch keine Vernetzung bzw. Vulkanisierung der Kautschukphase stattfindet, die thermoplastische Phase jedoch in einem zumindest teilweise plastifizierten, viskosen Zustand überführt wird, vorgemischt und homogenisiert werden. Auf diese Weise wird zunächst eine sehr homogene Masse erzeugt. In einer zweiten Prozessstufe kann diese homogenisierte Masse dann, z.B. auf einem Walzwerk oder in einem Extruder, wie insbesondere einem Zweischneckenextruder, plastifiziert und die Kautschukphase vernetzt werden, was insbesondere durch entsprechende Temperaturführung auf eine Temperatur geschehen kann, welche mindestens der Aktivierungstemperatur der eingesetzten Vernetzungsmittel entspricht. Die Vorteile einer solchen zweistufigen Prozessführung bestehen vornehmlich in einer fertigungstechnischen Trennung der Homogenisierung von der Vernetzung des Kautschuks, wobei in der ersten Prozessstufe insbesondere eine homogene Verteilung der Kautschukphase durch eine hinreichend lange gewählte Misch- bzw. Knetzeit in Verbindung mit einer geeigneten Geometrie der Knetwellen gesteuert werden kann. Als nachteilig kann indes die notwendigerweise diskontinuierliche bzw. batchweise Verfahrensführung sowie der relativ Investitionsaufwand erachtet werden.

Alternativ zu einem derartigen mehrstufigen Prozess kann daher auch ein einstufiger Prozess zur Herstellung des thermoplastischen Elastomer-Werkstoffes gewählt werden, wobei vorzugsweise vorgesehen sein kann, dass das wenigstens eine natürliche Polymer aus der Gruppe Polylactid und Lignin einschließlich deren Mischungen und/oder Derivaten und das wenigstens eine Polyamid auf der Basis von Dimerfettsäure mit dem Kautschuk vorgemischt und die Mischung anschließend plastifiziert und homogenisiert wird. Bei einem solchen einstufigen Prozess können die thermoplastischen Matrixbestandteile, welche sich z.B. in pulvriger oder partikulärer Form befinden, mit der z.B. ebenfalls pulvrigen oder auch flüssig-viskosen Kautschukkomponente sowie vorzugsweise auch mit den Weichmachern, Vernetzungsmitteln und gegebenenfalls weiteren Additiven, Füllstoffen und/oder Verstärkungsfasern in Form einer einfachen Vormischung direkt homogenisiert werden, wobei die thermoplastische Phase plastifiziert wird. Dies kann insbesondere in einem Extruder, vorzugsweise in einem Doppelschneckenextruder, wie z.B. einem Gleichdrall-Doppelschneckenextruder, oder auch in einem Kneter geschehen. In demselben Verfahrensschritt - insbesondere in demselben Extruder oder Kneter - kann dann die Vernetzung bzw. Vulkanisierung der Kautschukkomponente eingeleitet werden, was wiederum durch entsprechende Temperaturführung, gegebenenfalls in Verbindung mit der mechanisch eingebrachten Scherung, geschehen kann, indem die Temperatur und gegebenenfalls die Drehzahl des Extruders bzw. der Mischelemente des Kneters so eingestellt wird bzw. werden, dass die Vernetzungsmittel aktiviert werden, aber eine thermische Schädigung der Polymere vermieden wird. Ein solcher einstufiger Prozess ist hinsichtlich der Investitionskosten in der Regel wirtschaftlicher als der oben beschriebene zweistufige Prozess und kann kontinuierlich oder semikontinuierlich erfolgen.

Wie bereits erwähnt, ist es folglich sowohl bei einem mehrstufigen als auch bei einer einstufigen Verfahrensführung vorzugsweise möglich, dass der in das Plastifikat eindispergierte Kautschuk zumindest teilweise vernetzt wird.

In vorteilhafter Ausgestaltung kann dabei vorgesehen sein, dass das wenigstens eine natürliche Polymer aus der Gruppe Polylactid und Lignin einschließlich deren Mischungen und/oder Derivaten und das wenigstens eine Polyamid auf der Basis von Dimerfettsäure mit dem Kautschuk vorgemischt und die Mischung anschließend
- in einem Extruder plastifiziert und homogenisiert wird, wobei dem Extruder wenigstens ein Vernetzungsmittel stromab der Aufgabestelle für das plastifizierbare Polymer und den Kautschuk zugesetzt wird; oder
- in einem Kneter plastifiziert und homogenisiert wird, wobei dem Kneter wenigstens ein Vernetzungsmittel zu einem späteren Zeitpunkt zugesetzt wird, an welchem der Kautschuk bereits in das plastifizierte Polymer eindispergiert worden ist.
Das Vernetzungs- bzw. Vulkanisierungsmittel kann folglich ebenso wie gegebenenfalls die weiteren Additive an einer Stelle bzw. zu einem Zeitpunkt dem Extruder bzw. dem Kneter aufgegeben werden, an welcher bzw. welchem die thermoplastische Phase bereits plastifiziert worden ist. Im Falle der Verwendung eines Extruders kann das Vernetzungs- bzw. Vulkanisierungsmittel z.B. über eine oder mehrere Seitenbeschickungen in den Extruder injiziert werden. Dies ermöglicht eine schnellere Einmischung in die Schmelze und vermag somit die für eine einwandfreie Homogenisierung erforderliche Verweilzeit in dem Extruder zu verkürzen.

Wie ebenfalls bereits erwähnt, kann das wenigstens eine Vernetzungsmittel nach dem Zusetzen dann thermisch oder thermomechanisch, z.B. durch Erhöhen der Temperatur und/oder entsprechende Einstellung der Drehzahl der Extruderschnecke(n) bzw. der Mischeinrichtungen und dem damit verbundenen Eintrag von Scherenergie, aktiviert werden, um einen thermoplastisches Elastomer-Werkstoff mit bereits (vor)vernetzter Kautschukphase zu erhalten. Vorteilhafte Aktivierungstemperaturen, bei welchen eine thermische Schädigung insbesondere der für die thermoplastische Phase eingesetzten Polymere auf der Basis nachwachsender Rohstoffe vermieden wird, können hierbei zwischen etwa 140°C und etwa 230°C, insbesondere zwischen etwa 150°C und etwa 210°C, betragen. Bei einem einstufigen Verfahren in einem Doppelschneckenextruder haben sich hinsichtlich einer praktisch vollständige Vernetzung/Vulkanisierung des Kautschuks unter zuverlässiger Vermeidung thermischer Schädigungen insbesondere Temperaturen im Bereich von etwa 180°C bis etwa 190°C als besonders geeignet erwiesen; insbesondere im Falle eines zweistufigen Verfahrens mit einer länger möglichen Verweilzeit kann diese Temperatur auch auf einen Bereich von etwa 150°C bis etwa 170°C abgesenkt werden.

Nachstehend ist die Erfindung anhand von Ausführungsbeispielen näher erläutert:

### Beispiel 1:

### Ausgangsstoffe:

| | |
|---|---|
| Elastomere Phase: | 100 phr Naturkautschuk (NR) |
| Thermoplastische Phase: | 30 phr Polyamid auf der Basis von Dimerfettsäure (Handelsname *Macromelt 2344* der Henkel KGaA) |
| | 10 phr Polylactid |
| Weichmacher: | 10 phr Rapsöl |
| Vernetzungsmittel: | 1 phr Peroxid (2,5-Dimethyl-2,5-di(tertiärbutylperoxy)hexan) |
| Stabilisatoren: | Antioxidationsmittel (Pentaerythrit-tetrakis(3-(3,5-di-tert-butyl-4-hydroxyphenyl)propionat)) |
| Füllstoffe: | 5 phr Talk |

### Verfahrensparameter:

Einstufige Verfahrensführung auf Gleichdrall-Doppelschneckenextruder
Temperatur: 160°C bis 220°C
Durchsatz: 150 bis 500 kg/h
Schneckendrehzahl: 170 bis 500/min

Die extrudierte Masse wurde zu dem thermoplastischen Elastomer-Werkstoff granuliert. Sodann wurden mittels Spritzgießen Probenkörper hergestellt und die folgenden Werkstoffparameter ermittelt:

### Werkstoffparameter:

Dichte: 0,96 g/cm³
Härte: 41 Shore A
Druckverformungsrest (DVR): 35%
Reißfestigkeit (längs/quer): 3,3 MPa/5,9 MPa
Bruchdehnung (längs/quer): 473%/780%

### Beispiel 2:

### Ausgangsstoffe:

| | |
|---|---|
| Elastomere Phase: | 100 phr Naturkautschuk (NR) |
| Thermoplastische Phase: | 40 phr Polyamid auf der Basis von Dimerfettsäure (Handelsname *Macromelt 2344* der Henkel KGaA) |
| | 20 phr Polylactid |
| Weichmacher: | 10 phr Glycerintriacetat |
| Vernetzungsmittel: | 1 phr Peroxid (2,5-Dimethyl-2,5-di(tertiärbutylperoxy)hexan) |
| Stabilisatoren: | 0,4 phr |
| Füllstoffe: | 10 phr Talk und 10 phr Kieselgur |

### Verfahrensparameter:

Einstufige Verfahrensführung auf Gleichdrall-Doppelschneckenextruder sowie Granulierung entsprechend Beispiel 1.

### Werkstoffparameter:

Reißfestigkeit (längs/quer): 4,4 MPa/3,6 MPa
Bruchdehnung (längs/quer): 130%/582%
   (ermittelt im Zugversuch DIN 53504 S2, DIN 527-3, 23°C, 0,09 MPa, 200 mm/min)

## Patentansprüche

1. Plastifizierbarer Kunststoff-Werkstoff in Form eines thermoplastischen Elastomer-Werkstoffes, enthaltend
- einen Anteil an wenigstens einem natürlichen Polymer aus der Gruppe Polylactid und Lignin einschließlich deren Mischungen und/oder Derivaten; und
- einen Anteil an wenigstens einem Polyamid auf der Basis von Dimerfettsäure;
wobei der thermoplastische Elastomer-Werkstoff ferner einen Anteil an hierin eindispergiertem Kautschuk enthält.

2. Thermoplastischer Elastomer-Werkstoff nach Anspruch 1, **dadurch gekennzeichnet, dass** er in Form eines Polymer-Blends vorliegt.

3. Thermoplastischer Elastomer-Werkstoff nach Anspruch 1 oder 2, **dadurch gekennzeichnet, dass** er zwischen 5 Mass.-% und 80 Mass.-% des Polyamides auf der Basis von Dimerfettsäure, bezogen auf die Polymermatrix aus sowohl Polylactid, Lignin, deren Derivate oder Mischungen als auch dem Polyamid auf der Basis von Dimerfettsäure, enthält.

4. Thermoplastischer Elastomer-Werkstoff nach einem der Ansprüche 1 bis 3, **dadurch gekennzeichnet, dass** das Polyamid cyclische und/oder acyclische Dimerfettsäureeinheiten aufweist, welche durch Dimerisierung von ungesättigten Fettsäuren zwischen 10 und 30 Kohlenstoffatomen oder deren Gemische erhalten worden sind, insbesondere aus der Gruppe Oleinsäure (cis-9-Octadecensäure) und Erucasäure (cis-13-Docosensäure).

5. Thermoplastischer Elastomer-Werkstoff nach einem der Ansprüche 1 bis 4, **dadurch gekennzeichnet, dass** das Polyamid Diamineinheiten aufweist, insbesondere aus der Gruppe umfassend die Alkylendiamine mit endständigen Aminogruppen und die Polyetherdiamine mit endständigen Aminogruppen.

6. Thermoplastischer Elastomer-Werkstoff nach einem der Ansprüche 1 bis 5, **dadurch gekennzeichnet, dass** das Polyamid auf der Basis von Dimerfettsäure wenigstens eine der folgenden Werkstoffeigenschaften aufweist:
- eine Erweichungstemperatur zwischen 80°C und 210°C;
- eine Dichte zwischen 0,95 g/cm³ und 1,0 g/cm³;
- eine Schmelzviskosität zwischen 2500 mPas und 30000 mPas.

7. Thermoplastischer Elastomer-Werkstoff nach einem der Ansprüche 1 bis 6, **dadurch gekennzeichnet, dass** er ferner wenigstens einen feinpartikulären, insbesondere mineralischen Feststoff, insbesondere mit einer Partikelgröße zwischen 0,5 µm und 50 µm, enthält.

8. Thermoplastischer Elastomer-Werkstoff nach einem der Ansprüche 1 bis 7, **dadurch gekennzeichnet, dass** er einen Anteil zwischen insgesamt 10 phr und 300 phr des wenigstens einen natürlichen Polymers aus der Gruppe Polylactid und Lignin einschließlich deren Mischungen und/oder Derivaten einschließlich des Anteils an wenigstens einem Polyamid auf der Basis von Dimerfettsäure enthält, wobei die Einheit "phr" "per hundred rubber" bedeutet und sich auf den Massenanteil der thermoplastischen Phase pro 100 Massenanteilen Kautschuk bezieht.

9. Thermoplastischer Elastomer-Werkstoff nach einem der Ansprüche 1 bis 8, **dadurch gekennzeichnet, dass** er ferner wenigstens ein thermisch und/oder mittels Strahlung aktivierbares Vernetzungsmittel enthält, welches insbesondere eine Aktivierungstemperatur zwischen 120°C und 220°C aufweist.

10. Thermoplastischer Elastomer-Werkstoff nach Anspruch 9, **dadurch gekennzeichnet, dass** das Vernetzungsmittel aus der Gruppe der Peroxide, Phenolharze, Silane, der Schwefel spendenden Substanzen, insbesondere aus der Gruppe Schwefel, Schwefelhalogenide, Thiocarbamate, Thioharnstoffe, Thiurame, Dithiophosphate, Guanidine, Mercaptobenzothiazole und Benzothiazolylsulfenamide, und Metalloxide gewählt ist.

11. Thermoplastischer Elastomer-Werkstoff nach einem der Ansprüche 1 bis 10, **dadurch gekennzeichnet, dass** er ferner wenigstens einen Weichmacher, insbesondere aus der Gruppe der natürlichen Öle und Wachse, der natürlichen aliphatischen Mono-, Di- und Tricarbonsäuren einschließlich deren Salze und Ester, insbesondere deren Glyceride, und der vernetzten ungesättigten Pflanzenöle, enthält.

12. Thermoplastischer Elastomer-Werkstoff nach einem der Ansprüche 1 bis 11, **dadurch gekennzeichnet, dass** der Kautschuk zumindest teilweise vernetzt vorliegt.

13. Polymer-Formteil aus einem Kunststoff-Werkstoff in Form eines thermoplastischen Elastomer-Werkstoffes nach einem der Ansprüche 1 bis 12, insbesondere in Form von konstruktiven und technischen Teilen oder in Form Gebrauchsgegenständen einschließlich Spielzeug sowie Verpackungsmaterialien und -folien, wobei der Kautschuk zumindest teilweise vernetzt vorliegt.

14. Verfahren zur Herstellung eines Kunststoff-Werkstoffes in Form eines thermoplastischen Elastomer-Werkstoffes nach einem der Ansprüche 1 bis 13, indem wenigstens ein natürliches Polymer aus der Gruppe Polylactid und Lignin einschließlich deren Mischungen und/oder Derivaten und wenigstens ein Polyamid auf der Basis von Dimerfettsäure, gegebenenfalls unter Zusetzen wenigstens einer weiteren Komponente aus der Gruppe der
- feinpartikulären Feststoffe;
- Verstärkungsfasern;
- Weichmacher; und
- weiteren Additive
plastifiziert und homogenisiert wird, wobei ein Anteil an Kautschuk zugesetzt wird, wonach das Plastifikat abgekühlt wird.

15. Verfahren nach Anspruch 14, **dadurch gekennzeichnet, dass** der in das Plastifikat eindispergierte Kautschuk zumindest teilweise vernetzt wird.

16. Verfahren nach Anspruch 14 oder 15, **dadurch gekennzeichnet, dass** wenigstens ein Vernetzungsmittel zugesetzt und das Vernetzungsmittel thermisch und/oder thermomechanisch aktiviert wird, wobei das Vernetzungsmittel insbesondere bei einer Verarbeitungstemperatur des wenigstens einen natürlichen Polymers aus der Gruppe Polylactid und Lignin einschließlich deren Mischungen und/oder Derivaten und des wenigstens einen Polyamides auf der Basis von Dimerfettsäure zwischen 140°C und 230°C wird.

## Claims

1. Plasticizable polymer material in the form of a thermoplastic elastomer material, comprising
- a proportion of at least one natural polymer from the group of polylactide and lignin, including mixtures and/or derivatives thereof; and
- a proportion of at least one polyamide based on dimer fatty acid;
wherein the thermoplastic elastomer material also comprises a proportion of rubber dispersed therein.

2. Thermoplastic elastomer material according to Claim 1, **characterized in that** it is in the form of a polymer blend.

3. Thermoplastic elastomer material according to Claim 1 or 2, **characterized in that** it contains between 5% by mass and 80% by mass of the polyamide based on dimer fatty acid, based on the polymer matrix composed of both polylactide, lignin or derivatives or mixtures thereof and the polyamide based on dimer fatty acid.

4. Thermoplastic elastomer material according to any of Claims 1 to 3, **characterized in that** the polyamide has cyclic and/or acyclic dimer fatty acid units which have been obtained by dimerization of unsaturated fatty acids between 10 and 30 carbon atoms or mixtures thereof, especially from the group of oleic acid (cis-9-octadecenoic acid) and erucic acid (cis-13-docosenoic acid).

5. Thermoplastic elastomer material according to any of Claims 1 to 4, **characterized in that** the polyamide has diamine units, especially from the group comprising the alkylenediamines having terminal amino groups and the polyether diamines having terminal amino groups.

6. Thermoplastic elastomer material according to any of Claims 1 to 5, **characterized in that** the polyamide based on dimer fatty acid has at least one of the following material properties:
- a softening temperature between 80°C and 210°C;
- a density between 0.95 g/cm³ and 1.0 g/cm³;
- a melt viscosity between 2500 mPas and 30 000 mPas.

7. Thermoplastic elastomer material according to any of Claims 1 to 6, **characterized in that** it further comprises at least one fine-particulate, especially mineral, solid, especially having a particle size between 0.5 µm and 50 µm.

8. Thermoplastic elastomer material according to any of Claims 1 to 7, **characterized in that** it has a proportion totalling between 10 phr and 300 phr of the at least one natural polymer from the group of polylactide and lignin including mixtures and/or derivatives thereof, including the proportion of at least one polyamide based on dimer fatty acid, where the unit "phr" means "per hundred rubber" and relates to the proportion by mass of the thermoplastic phase per 100 parts by mass of rubber.

9. Thermoplastic elastomer material according to any of Claims 1 to 8, **characterized in that** it further comprises at least one crosslinking agent activatable thermally and/or by means of radiation, which especially has an activation temperature between 120°C and 220°C.

10. Thermoplastic elastomer material according to Claim 9, **characterized in that** the crosslinking agent is selected from the group of the peroxides, phenolic resins, silanes, the sulfur donor substances, especially from the group of sulfur, sulfur halides, thiocarbamates, thioureas, thiurams, dithiophosphates, guanidines, mercaptobenzothi-azoles and benzothiazolylsulfenamides, and metal oxides.

11. Thermoplastic elastomer material according to any of Claims 1 to 10, **characterized in that** it further comprises at least one plasticizer, especially from the group of the natural oils and waxes, the natural aliphatic mono-, di- and tricarboxylic acids including the salts and esters thereof, especially the glycerides thereof, and the crosslinked unsaturated vegetable oils.

12. Thermoplastic elastomer material according to any of Claims 1 to 11, **characterized in that** the rubber is in at least partly crosslinked form.

13. Polymer moulding formed from a polymer material in the form of a thermoplastic elastomer material according to any of Claims 1 to 12, especially in the form of structural and technical parts or in the form of consumer articles including toys and packaging materials and films, wherein the rubber is in at least partly crosslinked form.

14. Process for producing a polymer material in the form of a thermoplastic elastomer material according to any of Claims 1 to 13, by plasticizing and homogenizing at least one natural polymer from the group of polylactide and lignin including mixtures and/or derivatives thereof and at least one polyamide based on dimer fatty acid, optionally with addition of at least one further component from the group of the
- fine-particulate solids;
- reinforcing fibres;
- plasticizers; and
- further additives,
wherein a proportion of rubber is added, and then the plasticized material is cooled down.

15. Process according to Claim 14, **characterized in that** the rubber dispersed in the plasticized material is at least partly crosslinked.

16. Process according to Claim 14 or 15, **characterized in that** at least one crosslinking agent is added and the crosslinking agent is activated thermally and/or thermomechanically, the crosslinking agent especially being at a processing temperature of the at least one natural polymer from the group of polylactide and lignin including mixtures and/or derivatives thereof and the at least one polyamide based on dimer fatty acid between 140°C and 230°C.

## Revendications

1. Matière plastique plastifiable sous la forme d'une matière élastomère thermoplastique, contenant :
- une quotité d'au moins un polymère naturel appartenant au groupe comprenant le polylactide et la lignine y compris leurs mélanges et/ou dérivés ; et
- une quotité d'au moins un polyamide à base d'acide gras dimère ;
la matière élastomère thermoplastique contenant en outre une quotité de caoutchouc dispersée dedans.

2. Matière élastomère thermoplastique selon la revendication 1, **caractérisée en ce qu'**elle se trouve sous la forme d'un mélange de polymères.

3. Matière élastomère thermoplastique selon la revendication 1 ou 2, **caractérisée en ce qu'**elle contient entre 5 % en masse et 80 % en masse du polyamide à base d'acide gras dimère, par rapport à la matrice polymère composée tant de polylactide, de lignine, de leurs dérivés ou mélanges que du polyamide à base d'acide gras dimère.

4. Matière élastomère thermoplastique selon l'une quelconque des revendications 1 à 3, **caractérisée en ce que** le polyamide comporte des motifs d'acide gras dimère cycliques et/ou acycliques obtenus par dimérisation d'acides gras insaturés d'entre 10 et 30 atomes de carbone ou de leurs mélanges, appartenant notamment au groupe comprenant l'acide oléique (acide cis-9-octadécène) et l'acide érucique (acide cis-13-docosène).

5. Matière élastomère thermoplastique selon l'une quelconque des revendications 1 à 4, **caractérisée en ce que** le polyamide comprend des motifs diamine, appartenant notamment au groupe comprenant les akylènediamines à groupes aminés terminaux et les polyétherdiamines à groupes aminés terminaux.

6. Matière élastomère thermoplastique selon l'une quelconque des revendications 1 à 5, **caractérisée en ce que** le polyamide à base d'acide gras dimère comporte au moins une des propriétés de matière suivantes :
- une température de ramollissement comprise entre 80°C et 210°C ;
- une masse volumique comprise entre 0,95 g/cm³ et 1,0 g/cm³ ;
- une viscosité à l'état fondu comprise entre 2500 mPas et 30000 mPas.

7. Matière élastomère thermoplastique selon l'une quelconque des revendications 1 à 6, **caractérisée en ce qu'**elle contient en outre au moins un corps solide à particules fines, notamment minéral, notamment avec une taille de particules comprise entre 0,5 µm et 50 µm.

8. Matière élastomère thermoplastique selon l'une quelconque des revendications 1 à 7, **caractérisée en ce qu'**elle contient une quotité entre au total 10 phr et 300 phr de l'au moins un polymère naturel appartenant au groupe comprenant le polylactide et la lignine y compris leurs mélanges et/ou dérivés comprenant la quotité d'au moins un polyamide à base d'acide gras dimère, l'unité « phr » signifiant « per hundred rubber » (par 100 parties de caoutchouc) et se référant à la quotité massique de la phase thermoplastique par 100 quotités massiques de caoutchouc.

9. Matière élastomère thermoplastique selon l'une quelconque des revendications 1 à 8, **caractérisée en ce qu'**elle contient en outre au moins un moyen de réticulation activable thermiquement et/ou par rayonnement comportant notamment une température d'activation comprise entre 120°C et 220°C.

10. Matière élastomère thermoplastique selon la revendication 9, **caractérisée en ce que** le moyen de réticulation est sélectionné dans le groupe comprenant les péroxydes, les résines phénolées, les silanes, les substances donnant du soufre, notamment dans le groupe comprenant le soufre, les halogénures de soufre, les thiocarbamates, les thiourées, les thiurames, les dithiophosphates, les guanidines, les mercaptobenzothiazoles et les benzothiazolylsulfènamides et les oxydes métalliques.

11. Matière élastomère thermoplastique selon l'une quelconque des revendications 1 à 10, **caractérisée en ce qu'**elle contient en outre au moins un plastifiant, notamment appartenant au groupe des huiles et cires naturelles, des acides mono, di et tricarboxyliques aliphatiques naturels comprenant leurs sels et esters, notamment leurs glycérides et les huiles végétales insaturées réticulées.

12. Matière élastomère thermoplastique selon l'une quelconque des revendications 1 à 11, **caractérisée en ce que** le caoutchouc est présent sous forme au moins en partie réticulée.

13. Pièce moulée en polymère réalisée à partir d'une matière plastique sous la forme d'une matière élastomère thermoplastique selon l'une quelconque des revendications 1 à 12, notamment sous la forme de parties de construction ou techniques ou sous la forme d'objets utilitaires comprenant les jouets ainsi que les matières et films d'emballage, le caoutchouc étant présent sous forme au moins en partie réticulée.

14. Procédé de fabrication d'une matière plastique sous la forme d'une matière élastomère thermoplastique selon l'une quelconque des revendications 1 à 13, où au moins un polymère naturel appartenant au groupe comprenant le polylactide et la lignine y compris leurs mélanges et/ou dérivés et au moins un polyamide à base d'acide gras dimère, est plastifié et homogénéisé, le cas échéant en présence d'au moins un composant supplémentaire appartenant au groupe comprenant :
- les corps solides à particules fines ;
- les fibres de renforcement ;
- les plastifiants ; et
- les additifs supplémentaires,
une quotité de caoutchouc étant ajoutée, puis la matière plastifiée étant refroidie.

15. Procédé selon la revendication 14, **caractérisé en ce que** le caoutchouc dispersé dans la matière plastifiée est au moins en partie réticulé.

16. Procédé selon la revendication 14 ou 15, **caractérisé en ce qu'**au moins un moyen de réticulation est ajouté et que le moyen de réticulation est activé thermiquement et/ou thermomécaniquement, le moyen de réticulation étant notamment compris entre 140°C et 230°C pour une température de traitement de l'au moins un polymère naturel appartenant au groupe comprenant le polylactide et la lignine y compris leurs mélanges et/ou dérivés et l'au moins un polyamide à base d'acide gras dimère.
